# EUROPEAN PATENT SPECIFICATION

(11) **EP 3 447 849 B1**
(45) Date of publication and mention of the grant of the patent: **08.04.2020**
(21) Application number: 18186765.6
(22) Date of filing: 01.08.2018
(51) Int. Cl.: H01R 13/453, H01R 13/52

(54) **CONNECTOR FOR CHARGING ELECTRIC VEHICLES**
VERBINDER ZUM LADEN VON ELEKTROFAHRZEUGEN
CONNECTEUR POUR CHARGER DES VÉHICULES ÉLECTRIQUES

(30) Priority: 04.08.2017 IT 201700090346
(43) Date of publication of application: 27.02.2019
(73) Proprietor: GEWISS S.p.A., 24069 Cenate Sotto (Bergamo) (IT)
(72) Inventor: DOMENICO, BOSATELLI, 24069 CENATE SOTTO (BERGAMO) (IT)
(74) Representative: Forattini, Amelia

(56) References cited:
- JP-A- H07 107 622
- JP-A- 2009 112 076
- US-A1- 2012 234 061
- US-A1- 2013 196 522

## Description

The present invention relates to a connector for charging electric vehicles.

As is known, the batteries of electric vehicles are charged by connection to adapted fixed outlets connected to the electrical grid.

Currently commercially available Type 2 connectors are used in outlets ("wall boxes") for charging vehicles in a private and public environment, typically in a garage, and in charging points of private, commercial and public parking spaces.

The connectors must comply with the EN62196 standard, which requires IPXXD protection on the "active contact holes" (phases and neutral), provided by means of systems for exclusion from the electrical grid or by means of shutters.

The EN62196 standard also provides for locking the plug in the outlet if the outlet is under load.

For this purpose, currently commercially available outlets provide different and separate mechanisms in order to comply with the various protection and safety functions.

Another problem of connectors of the known type is constituted by the fact that their use is not easy, because the operation for inserting the plug requires relatively complicated movements such as a rotation and/or translation of the plug itself.

JP2009112076 (A) discloses a charge plug structure equipped with a charge plug for detachably connecting the connection plug of an external power source; a grommet for making a car body hold the charge plug, and a charge wire harness. The charge wire harness is so arranged as to allow the charge plug to be detached from the grommet and to be taken out of the car body, keeping the conductive state between the battery and the charge plug, and in the state where the charge plug is held in the grommet it is wound on the winding reel of a cord reel.

JPH07107622 (A) discloses a connector for charging an electric automobile wherein the receptacle comprises a tubular cover having an outer diameter slightly smaller than the inner diameter of a tubular body and inner diameter slightly larger than the outer diameter of a columnar body and applied to the outer periphery of the tubular body while rotatably in the peripheral direction, a cover body provided for the tubular cover while covering one end face of the columnar body, and a receptacle side engaging part provided for the tubular cover. A plug comprises the tubular body provided with a plug side engaging part which is engaged with the receptacle side engaging part thus making the tubular cover rotatable in the tubular body. The cover body is provided with holes into which protruding terminals are inserted upon engagement of the engaging parts. The structure prevents short circuit within the receptacle, reverse connection of receptacle and plug, etc.

US2013196522 (A1) discloses a charge connector that can close an inner lid section and an outer lid section by one action to reliably avoid forgetting to close the inner lid section. The charge connector includes an opening section arranged on a vehicle, a connector connection section to which a cable for charging a battery is connected, an inner lid section that seals a connector connection section in the opening section, an inner lid hinge that is arranged in an opening and that rotates the inner lid section, an outer lid section that seals the opening section from outside of the vehicle, and an outer lid hinge that is installed on an opposite side of the inner lid hinge around the connector connection section and that rotates the outer lid section in a same plane as the inner lid section, wherein the outer lid section includes a rib that projects inside of the opening section on a surface closer to the opening section, the rib can be in contact with the inner lid section, and when the rib is in contact with the inner lid section, the rib is formed so that a normal line at a point of contact with the inner lid section in the plane, in which the inner lid section rotates, passes on a side of the inner lid hinge closer to the outer lid hinge.

The aim of the present invention is to provide a connector for charging electric vehicles that overcomes the drawbacks of the cited prior art.

Within the scope of this aim, an object of the invention is to provide a connector that has a single device designed to lock the plug in the inserted position during use and protect the connector when it is not in use, i.e., when the plug is not inserted (vandalism prevention function).

Another object of the invention is to provide a connector that allows easy and immediate insertion of the plug.

Another object is to provide a connector that has a compact construction and can be used easily in various types of charging structures.

Another object of the present invention is to provide a connector which, by virtue of its particular constructive characteristics, is capable of giving the greatest assurances of reliability and safety in use.

This aim and these and other objects which will become better apparent hereinafter are achieved by a connector for charging electric vehicles, comprising a receptacle body provided with receptacles adapted to receive respective pins of an electrical plug, a lid which can move between a lid closed position, in which said lid closes hermetically the access to said receptacle body, and a lid open position, which allows access to said receptacle body and the insertion of an electrical plug; said electrical plug having pins; said shutter means having at least two positions, a shutter closed position, in which said shutter means cover said receptacles, and a shutter open position, in which said shutter means clear said receptacles for the insertion of the pins of an electrical plug; said connector being characterized in that said shutter means in said shutter closed position lock said lid in said lid closed position.

Further characteristics and advantages will become better apparent from the description of preferred but not exclusive embodiments of the invention, illustrated by way of non-limiting example in the accompanying drawings, wherein:

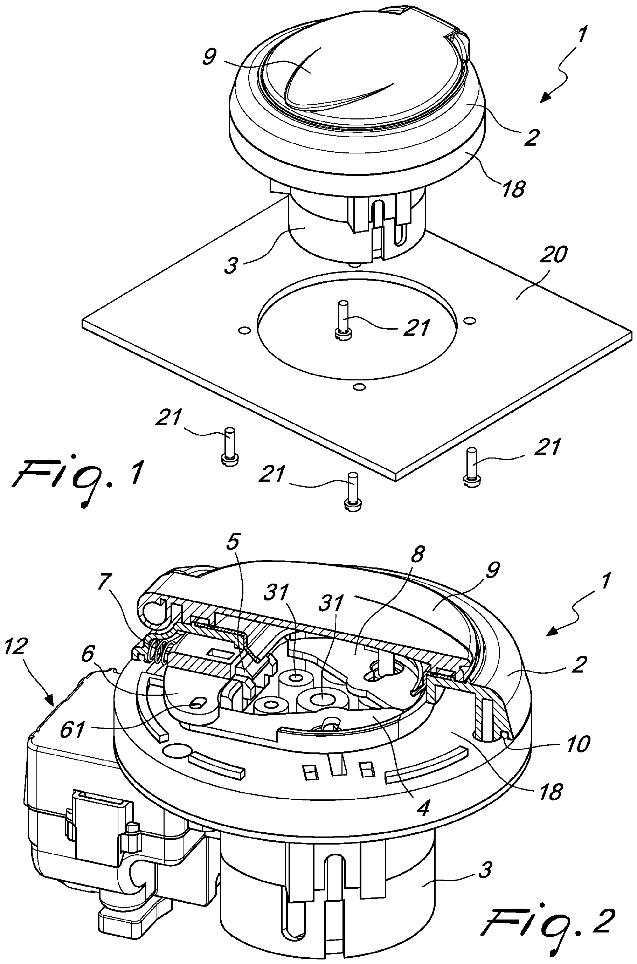

Figure 1 is a perspective view of the connector;
Figure 2 is a partially cutout perspective view of the connector;
Figure 3 is a perspective view of the upper part of the connector with the lid open;
Figure 4 is a bottom perspective view of the connector without some components;
Figure 5 is a partially cutout perspective view, in enlarged scale with respect to the preceding views, of the connector in the initial step of insertion of a plug;
Figure 6 is a view, similar to the preceding one, of a subsequent step of insertion of the plug;
Figure 7 is a partially cutout perspective view, showing the shutters in the open position when the plug is inserted;
Figure 8 is a partial perspective view, showing the actuator and the dovetail seat formed in the receptacle body of the connector;
Figure 9 is a partially cutout perspective view, in enlarged scale with respect to the preceding views, of the connector from below, in the step for the release of the stop tooth, which rotates, actuated by the upper carriage;
Figure 10 is another partially cutout perspective view, in enlarged scale with respect to the preceding views, showing the connector from below, while the slider is advancing, pushed by the carriage, and while the shutters rotate in order to engage the pins of the lid.

With reference to the cited figures, the connector for charging electric vehicles, according to the invention, generally designated by the reference numeral 1, includes a receptacle body 18 which accommodates receptacles 31 contained in a block 3 screwed into the receptacle body 18.

The receptacles 31, which are five in the specific case, perform the electrical connection in a "Type 2" outlet-plug assembly and include two pilot receptacles for signaling/controlling the state of the charging system.

A lid support 2 is fastened on top of the receptacle body 18 by means of screws that can be accessed from the lower side, i.e., the side that is not exposed, of the lid support 2.

The lid support 2 acts as a cover and containment of an articulation assembly constituted by a slider 6, a stop tooth 5, a return spring 7 and shutters 4 and 8.

The lid support 2 accommodates a lip-type gasket, a vandalism-prevention lid 9, provided with pins 91, and an intermediate gasket 10 which is arranged between the receptacle body 18 and the lid support 2.

The connector 1 is mounted on a panel 20 of a charging systems, such as wall boxes and charging points, inserting it from outside, with an interposed gasket, and fixing it from the inner side with screws 21.

IPXXD protection is provided by means of the two shutters 4 and 8, which rotate about respective ends which are pivoted to the actuation slider 6 arranged above the receptacle body 18.

The shutters 4 and 8 are articulated to the actuation slider 6 by means of pin-slot junctions constituted by the pins 41 and 81 of the shutters 4 and 8 and by slots 61 formed in the slider 6.

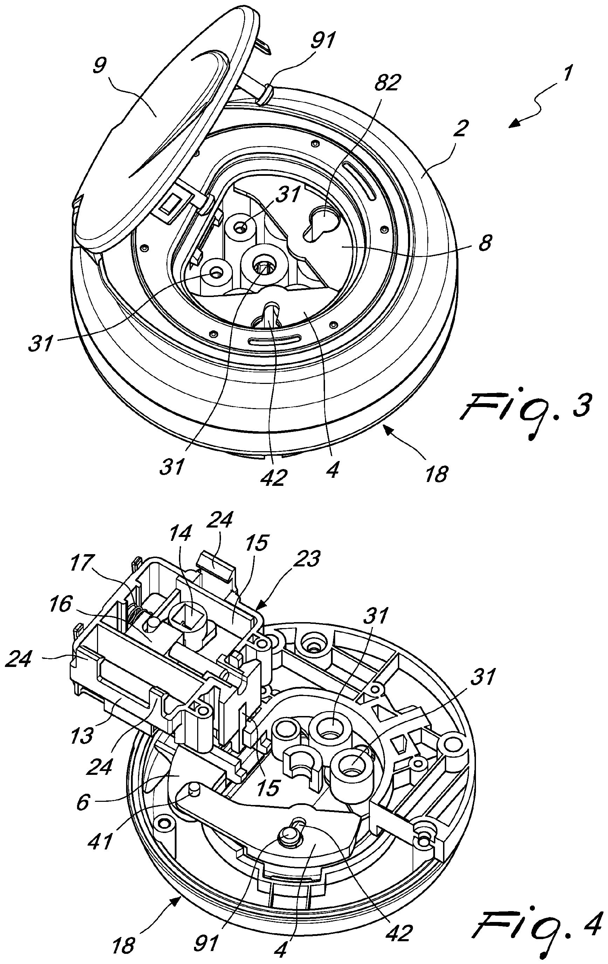

In the position in which the plug is not inserted, the shutters 4, 8 completely cover the inlet region of the active receptacles (L1-L2-L3-N), as can be seen in Figure 3, and are kept fixed in the closed position by means of the stop tooth 5, which is hooked firmly to the receptacle body 18. In this manner, the stop tooth 5 blocks the translation of the slider 6 and the consequent opening of the shutters 4, 8.

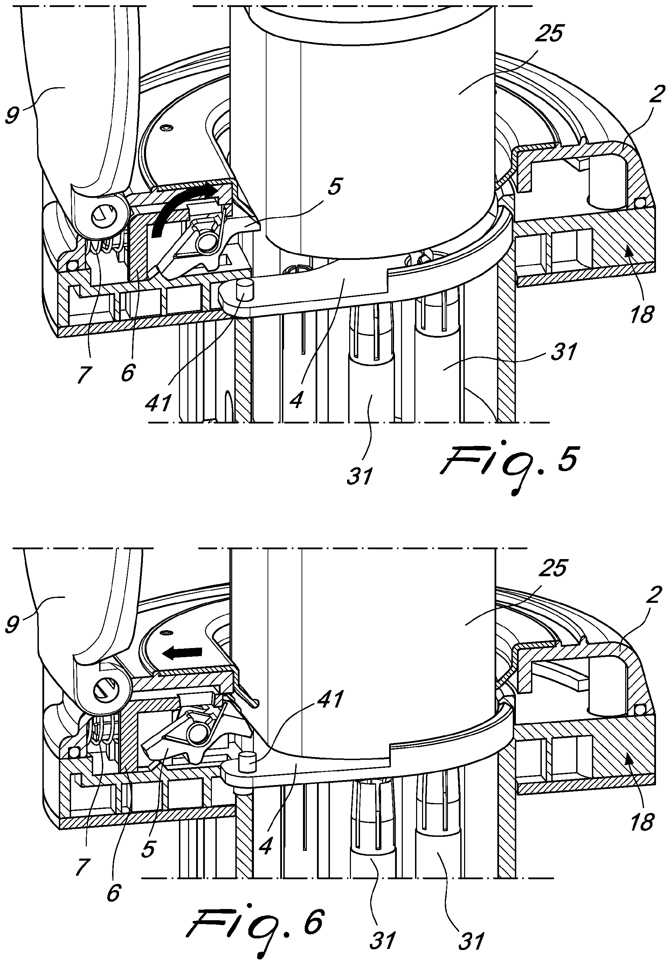

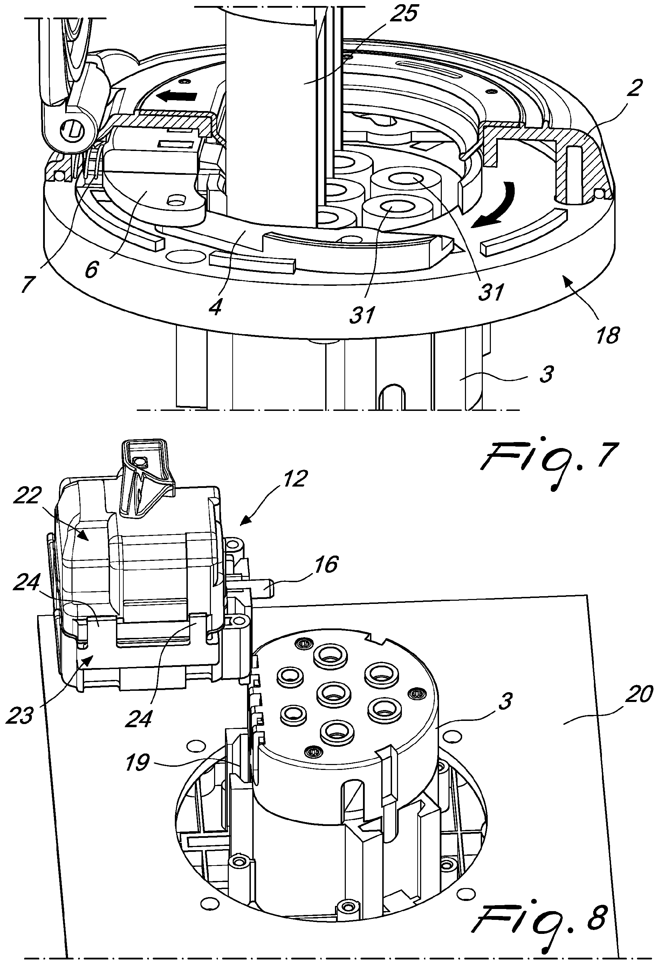

Upon the insertion of a plug 25, the stop tooth 5 lowers and disengages from the receptacle body 18, as shown schematically in Figure 5, allowing the slider 6 to translate (Figure 6) and the shutters 4, 8 to rotate and open in order to allow access to the electrical connection (Figure 7).

Upon extraction of the plug 25, the shutters 4, 8 close, actuated by the actuation slider 6, which is pushed by the return spring 7, so as to restore the initial condition, which is visible in Figure 3.

According to the provisions of the EN62196-1/2 standard, the inserted Type 2 plug cannot be disconnected under load.

This function is performed by an actuator 12, which locks the connected plug 25 by means of a bar 16.

The actuator 12 is mounted in a dovetail seat 19 formed in the receptacle body 18 and visible in Figure 8.

The actuator 12 is formed by two parts, a motor box assembly 22 and a lever system box assembly 23, which are firmly joined to each other by means of engagement teeth 24.

The lever system box assembly 23, shown in Figure 4, includes a containment housing 13, an actuation lever 14, an upper carriage 15, a lower carriage provided with the bar 16, and a return spring 17.

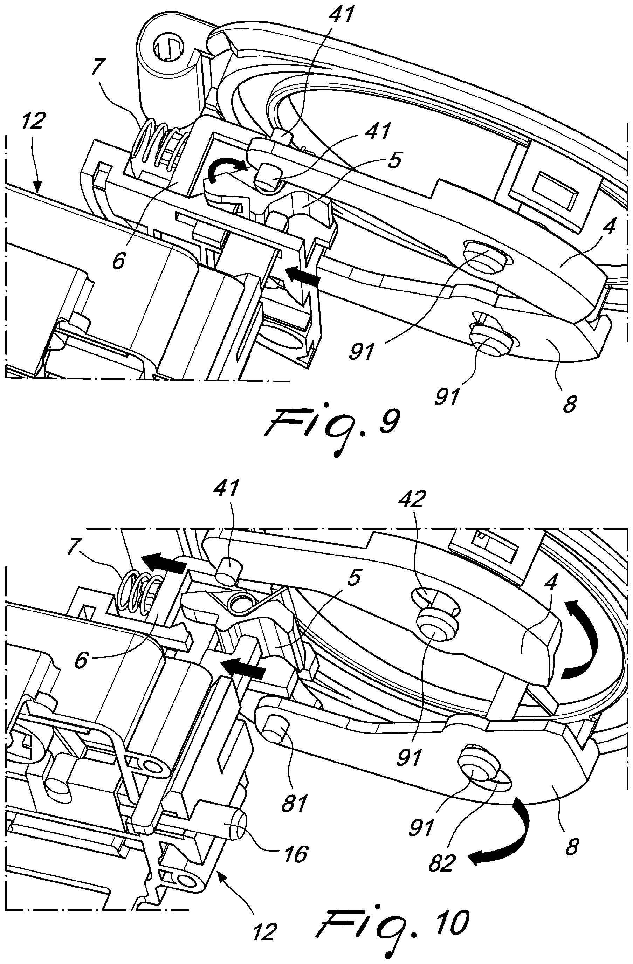

The vandalism-prevention function is performed by the actuator 12, which locks the lid 9 by means of the actuation of the slider 6 connected to the shutters 4, 8 according to the sequence of operations shown in Figures 9 and 10. The actuator 12 actuates the upper carriage 15, which rotates the stop tooth 5, releasing it. The subsequent advancement of the slider 6, pushed by the carriage 15, turns the shutters 4, 8, which engage the pins 91, locking the lid 9. For this purpose, each pin 91 has a mushroom-shaped head which can engage a slot 42, 82 that is formed in each shutter 4, 8.

The slot 42, 82 has a wider region which allows the passage of the mushroom-shaped head of the pin 91, and a narrower region which engages the mushroom-shaped head.

In practice it has been found that the invention achieves the intended aim and objects, providing a connector that is designed for use in outlets for charging vehicles in a private environment and in charging points of private, commercial and public parking spaces, which has a single device that has the dual function of locking the plug and of preventing vandalism.

The vandalism prevention function is performed by the locking of the closure lid when the plug is not inserted.

The device according to the present invention also allows to release the protective shutters with a plug insertion movement that is easy and straightforward, avoiding the movements of rotation and/or translation thereof that are instead required by traditional connectors.

The materials used, as well as the dimensions, may of course be any according to the requirements and the state of the art.

## Claims

1. A connector for charging electric vehicles, comprising a receptacle body (18) provided with receptacles (31) adapted to receive respective pins of an electrical plug (25), a lid (9) which can move between a lid closed position, in which said lid (9) closes hermetically the access to said receptacle body (18), and a lid open position, which allows access to said receptacle body (18) and the insertion of an electrical plug (25); said electrical plug (25) having pins,; shutter means (4, 8) having at least two positions, a shutter closed position, in which said shutter means (4, 8) cover said receptacles (31), and a shutter open position, in which said shutter means (4, 8) clear said receptacles (31) for the insertion of the pins of an electrical plug (25); said connector being **characterized in that** said shutter means (4, 8) in said shutter closed position lock said lid (9) in said lid closed position;
wherein said shutter to an articulation assembly (5, 6, 7), said articulation assembly actuating the movement of said shutters (4, 8) between said shutter open position and said shutter closed position;
wherein said lid is provided with pins (91) and each of said shutters (4, 8) is provided with a respective slot (42, 82); said pins (91) being engaged by said slots (42, 82) when said shutters (4, 8) turn, thereby locking said lid (9).

2. The connector according to claim 1, **characterized in that** said articulation assembly comprises a stop tooth (5), a slider (6) and a return spring (7) which acts on said slider (6).

3. The connector according to claim 2, **characterized in that** each of said shutters (4, 8) has a pair of pins (41, 81) at one of its ends; said pins (41, 81) engaging respective slots (61) formed in said slider (6).

4. The connector according to claim 2, **characterized in that**, in said shutter closed position, said stop tooth (5) blocks the translation of said slider (6) and of said shutters (4, 8) in said shutter closed position; when said plug (25) is inserted in said receptacle body (18), said stop tooth (5) being displaced by said plug (25), causing the translation of said slider (6) and the movement of said shutters (4, 8) to said shutter open position; when said plug (25) is extracted from said receptacle body (18), said shutters (4, 8) close, actuated by said slider (6), which is pushed by said return spring (7).

5. The connector according to claim 1, **characterized in that** it comprises a lock means (12, 16) for locking said plug (25) in said receptacle body (18) when said plug is under an electrical load.

6. The connector according to claim 5, **characterized in that** said lock means comprises an actuator (12), which actuates a bar (16) that engages a seat of said plug (25) in order to lock said plug in the inserted position.

7. The connector according to claim 6, **characterized in that** said actuator (12) comprises a motor box assembly (22) and a lever system box assembly (23); said lever system box assembly (23) comprising a containment housing (13), an actuation lever (14), an upper carriage (15), a lower carriage provided with said bar (16), and a return spring (17).

8. The connector according to claim 6, **characterized in that** said actuator (12) actuates said diaphragm means (4, 8), moving said diaphragm means (4, 8) into said shutter closed position, which they lock said lid (9) in said closed position.

9. The connector according to claim 8, **characterized in that** said actuator (12) actuates said upper carriage (15), which turns said stop tooth (5), releasing it, and causing a translation of said slider (6), pushed by said carriage (15), the translation of said slider (6) turning said shutters (4, 8), which engage said pins (91), locking said lid (9) in said closed position.

## Patentansprüche

1. Ein Verbinder zum Laden von Elektrofahrzeugen, der einen Buchsenkörper (18) umfasst, ausgestattet mit Buchsen (31), die ausgebildet sind, um entsprechende Stifte eines Stromsteckers (25) aufzunehmen; einen Deckel (9), der sich zwischen einer geschlossenen Deckelposition, in welcher der Deckel (9) den Zugang zu dem Buchsenkörper (18) hermetisch verschließt, und einer offenen Deckelposition bewegen kann, die den Zugang zu dem Buchsenkörper (18) und das Einführen eines Stromsteckers (25) gestattet; wobei der Stromstecker (25) Stifte hat; Verschlussmittel (4, 8) mit mindestens zwei Positionen, einer geschlossenen Verschlussposition, in welcher die Verschlussmittel (4, 8) die Buchsen (31) bedecken, und einer offenen Verschlussposition, in welcher die Verschlussmittel (4, 8) die Buchsen (31) zum Einführen der Stifte eines Stromsteckers (25) freigeben; wobei der Verbinder **dadurch gekennzeichnet ist, dass** die Verschlussmittel (4, 8) in der geschlossenen Verschlussposition den Deckel (9) in der geschlossenen Deckelposition blockieren; wobei die Verschlussmittel ein Paar von Drehverschlüssen (4, 8) umfassen, die jeweils ein Ende haben, das drehgelenkig mit einem Gelenkaufbau (5, 6, 7) verbunden ist, wobei der Gelenkaufbau die Bewegung der Verschlussmittel (4, 8) zwischen der offenen Verschlussposition und der geschlossenen Verschlussposition antreibt; wobei der Deckel mit Stiften (91) ausgestattet und jeder der Verschlüsse (4, 8) mit einem entsprechenden Schlitz (42, 82) versehen ist; wobei die Stifte (91) in die Schlitze (42, 82) eingreifen, wenn sich die Verschlussmittel (4, 8) drehen, und so den Deckel (9) blockieren.

2. Der Verbinder gemäß Anspruch 1, **dadurch gekennzeichnet, dass** der Gelenkaufbau einen Anschlagzahn (5), einen Schieber (6) und eine Rückstellfeder (7) umfasst, die auf den Schieber (6) einwirkt.

3. Der Verbinder gemäß Anspruch 2, **dadurch gekennzeichnet, dass** jedes der Verschlussmittel (4, 8) ein Paar von Stiften (41, 81) an einem seiner Enden hat, wobei die Stifte (41, 81) in entsprechende Schlitze (61) eingreifen, die in dem Schieber (6) geformt sind.

4. Der Verbinder gemäß Anspruch 2, **dadurch gekennzeichnet, dass** der Anschlagzahn (5) in der geschlossenen Verschlussposition die Translationsbewegung des Schiebers (6) und der Verschlussmittel (4, 8) blockiert; wobei der Anschlagzahn (5), wenn der Stecker (25) in den Buchsenkörper (18) gesteckt wird, von dem Stecker (25) verdrängt wird, was die Translationsbewegung des Schiebers (6) und die Bewegung der Verschlussmittel (4, 8) in die offene Verschlussposition auslöst; wenn der Stecker (25) aus dem Buchsenkörper (18) gezogen wird, schließen sich die Verschlussmittel (4, 8), betätigt von dem Schieber (6), der von der Rückstellfeder (7) geschoben wird.

5. Der Verbinder gemäß Anspruch 1, **dadurch gekennzeichnet, dass** er ein Blockiermittel (12, 16) zum Blockieren des Steckers (25) in dem Buchsenkörper (18), wenn der Stecker unter einer elektrischen Belastung steht, umfasst.

6. Der Verbinder gemäß Anspruch 5, **dadurch gekennzeichnet, dass** das Blockiermittel ein Betätigungselement (12) umfasst, das einen Riegel (16) betätigt, welcher in einen Sitz des Steckers (25) eingreift, um den Stecker in der eingeführten Position zu blockieren.

7. Der Verbinder gemäß Anspruch 6, **dadurch gekennzeichnet, dass** das Betätigungselement (12) einen Anschlusskastenaufbau (22) und einen Hebelsystemkastenaufbau (23) umfasst, wobei der Hebelsystemkastenaufbau (23) ein Aufnahmegehäuse (13), einen Betätigungshebel (14), einen oberen Schlitten (15), einen unteren Schlitten, der mit dem Riegel (16) ausgestattet ist, und eine Rückstellfeder (17) umfasst.

8. Der Verbinder gemäß Anspruch 6, **dadurch gekennzeichnet, dass** das Betätigungselement (12) die Verschlussmittel (4, 8) betätigt, indem es die Verschlussmittel (4, 8) in die geschlossene Verschlussposition bewegt, wobei sie den Deckel (9) in der geschlossenen Position blockieren.

9. Der Verbinder gemäß Anspruch 8, **dadurch gekennzeichnet, dass** das Betätigungselement (12) den oberen Schlitten (15) betätigt, der den Anschlagzahn (5) dreht, ihn loslässt und eine Translationsbewegung des von dem Schlitten (15) geschobenen Schiebers (6) auslöst, wobei die Translationsbewegung des Schiebers (6) die Verschlussmittel (4, 8) dreht, die in Eingriff mit den Stiften (91) stehen, den Deckel (9) in der geschlossenen Position blockierend.

## Revendications

1. Connecteur pour charger des véhicules électriques, comprenant un corps de prise (18) pourvu de réceptacles (31) adaptées pour recevoir des broches respectives d'une fiche électrique (25), un couvercle (9) qui peut se déplacer entre une position couvercle fermé, dans laquelle ledit couvercle (9) ferme hermétiquement l'accès audit corps de prise (18), et une position couvercle ouvert, qui permet l'accès audit corps de prise (18) et l'insertion d'une fiche électrique (25), ladite fiche électrique (25) comportant des broches; un moyen obturateur (4, 8) comportant au moins deux positions, une position obturateur fermé, dans laquelle ledit moyen obturateur (4, 8) recouvre lesdites réceptacles (31), et une position obturateur ouvert, dans laquelle ledit moyen obturateur (4, 8) dégage lesdites réceptacles (31) pour l'insertion des broches d'une fiche électrique (25); ledit connecteur étant **caractérisé en ce que** ledit moyen obturateur (4, 8), dans ladite position obturateur fermé, verrouille ledit couvercle (9) dans ladite position couvercle fermé; dans lequel ledit moyen obturateur comprend une paire d'obturateurs rotatifs (4, 8) qui comportent chacun une extrémité qui est pivotée sur un assemblage d'articulation (5, 6, 7), ledit assemblage d'articulation actionnant le mouvement desdits obturateurs (4, 8) entre ladite position obturateur ouvert et ladite position obturateur fermé; dans lequel ledit couvercle est pourvu de broches (91) et chacun desdits obturateurs (4, 8) est pourvu d'une encoche respective (42, 82); lesdites broches (91) étant engagées dans lesdites encoches (42, 82) quand lesdits obturateurs (4, 8) tournent, verrouillant ainsi ledit couvercle (9).

2. Connecteur selon la revendication 1, **caractérisé en ce que** ledit assemblage d'articulation comprend une dent de butée (5), un coulisseau (6) et un ressort de renvoi (7) qui agit sur ledit coulisseau (6).

3. Connecteur selon la revendication 2, **caractérisé en ce que** chacun desdits obturateurs (4, 8) comporte une paire de broches (41, 81) sur l'une de ses extrémités; lesdites broches (41, 81) s'engageant dans des encoches respectives (61) formées dans ledit coulisseau (6).

4. Connecteur selon la revendication 2, **caractérisé en ce que**, dans ladite position obturateur fermé, ladite dent de butée (5) bloque la translation dudit coulisseau (6) et desdits obturateurs (4, 8) dans ladite position obturateur fermé; quand ladite fiche (25) est insérée dans ledit corps de prise (18), ladite dent de butée (5) est déplacée par ladite fiche (25), provoquant la translation dudit coulisseau (6) et le déplacement desdits obturateurs (4, 8) vers ladite position obturateur ouvert; quand ladite fiche (25) est extraite dudit corps de prise (18), lesdits obturateurs (4, 8) se ferment, actionnés par ledit coulisseau (6) qui est poussé par ledit ressort de renvoi (7).

5. Connecteur selon la revendication 1, **caractérisé en ce qu'**il comprend un moyen de verrouillage (12, 16) pour verrouiller ladite fiche (25) dans ledit corps de prise (18) quand ladite fiche est sous charge électrique.

6. Connecteur selon la revendication 5, **caractérisé en ce que** ledit moyen de verrouillage comprend un actionneur (12), qui actionne une barre (16) s'engageant avec un siège de ladite fiche (25) de manière à verrouiller ladite fiche dans la position insérée.

7. Connecteur selon la revendication 6, **caractérisé en ce que** ledit actionneur (12) comprend un assemblage de boîte moteur (22) et un assemblage de boîte de système de levier (23); ledit assemblage de boite de système de levier (23) comprenant un boîtier de logement (13), un levier d'actionnement (14), un chariot supérieur (15), un chariot inférieur pourvu de ladite barre (16), et un ressort de renvoi (17).

8. Connecteur selon la revendication 6, **caractérisé en ce que** ledit actionneur (12) actionne ledit moyen de diaphragme (4, 8), déplaçant ledit moyen de diaphragme (4, 8) dans ladite position obturateur fermé, où il verrouille ledit couvercle (9) dans ladite position fermée.

9. Connecteur selon la revendication 8, **caractérisé en ce que** ledit actionneur (12) actionne ledit chariot supérieur (15) qui fait tourner ladite dent de butée (5), ce qui la libère et provoque une translation dudit coulisseau (6), poussé par ledit chariot (15), la translation dudit coulisseau (6) faisant tourner lesdits obturateurs (4, 8), qui s'engagent dans lesdites broches (91), verrouillant ainsi ledit couvercle (9) dans ladite position fermée.
